# EUROPEAN PATENT SPECIFICATION

(11) **EP 0 648 525 B1**
(45) Date of publication and mention of the grant of the patent: **25.02.1998**
(21) Application number: 94650027.9
(22) Date of filing: 18.10.1994
(51) Int. Cl.: B01D 53/85

(54) **Improvements in and relating to biofiltration**
Verbesserungen in Biofiltration
Améliorations dans la biofiltration

(30) Priority: 18.10.1993 IE 930785
(43) Date of publication of application: 19.04.1995
(73) Proprietor: BORD NA MONA, Dublin 2 (IE)
(72) Inventor: Byrne, Anne, Dublin 14 (IE)
(74) Representative: Schütte, Gearoid

(56) References cited:
- EP-A- 0 413 638
- BARBARA ELVERS ET AL. 'Ullmann's Encyclopedia of Industrial Chemistry Volume A 19' 1991 , VCH , WEINHEIM GERMANY * page 18 - page 19 * * page 23 - page 24 * * page 43 - page 44 *

## Description

The invention relates to a biofiltration medium and in particular to a biofiltration medium based on peat.

Biofiltration is a method of treatment for cleaning gas streams originating from a number of industrial and waste treatment activities. The removal of odorous components from the gas takes place by the activity of microorganisms (mainly bacteria) which are present on an organic carrier material or medium.

Waste gases are passed via ducting into a space located beneath or above the filter medium. As the gas passes through the filter the odorous compounds are absorbed onto an aqueous layer and are degraded by microorganisms which reside within the organic filter material. The end-products of the oxidation process are odourless compounds, mainly carbon dioxide, water, nitrates and sulphates.

Oxidation restores the absorption capacity of the filter material and provides the microorganisms with the nutrients necessary for their survival and growth. Thus the entire biofiltration process is self generating.

One of the main advantages of biofiltration in comparison with other techniques is that many chemically different compounds can be eliminated with a high degree of efficiency due to the adaptation of the microorganisms to the compounds present in the gas stream. Biofilters require little maintenance and have low energy requirements. The running costs of biological odour treatment technologies have been found to be 2-10 times lower than for other treatment methods. As there are no secondary disposal problems, biofiltration is the most "environmentally friendly" option for odour control.

Biofiltration is a proven odour control technology for a number of applications as described in the VDI guideline of biofilters 3477 (1991).

Biofiltration of gases is a result of physical, chemical and biological processes. The main physical process are adsorption and absorption. Malodorous compounds are adsorbed onto the filter medium and absorbed onto the layer of water surrounding the medium. The chemical reactions that take place on the surface of the biofiltration medium include precipitation, ion exchange and chemisorption. The biological processes are the breaking down of waste gases by microorganisms.

The efficiency of a biofilter depends on a large number of factors. One of the main factors is the biofiltration medium that is used in the biofilter.

More particularly, the invention relates to a biofiltration medium comprising discrete units consisting of peat.

EP-A-413638 describes a biofiltration medium of this type in which the discrete units of peat may be balls or pellets consisting of a mixture of a fragmented organic material and a binder. The binder consist of humidified peat classes 3 or 4 on the Modified von Post Scale. The fragmented organic material may be peat classed 1 or 2 on the Modified von Post Scale. In this case the ratio of dry mass of humidified peat to the mass of said fragmented organic material is between 0.7 and 3.9. The fragmented organic material may also be sawdust in which case the value of the ratio of dry mass of humidified peat to the mass of sawdust is 0.3 to 0.5.

The invention is characterised in that the biofiltration medium comprises peat nodules formed from high density fuel peat having von Post number of from 6 to 10, the nodules having a bulk density of 50% moisture content of at least 400 kg/m³ and at least 50% (w/w) of the nodules having an average dimension of between 10 mm and 20 mm.

In a preferred embodiment of the invention, at least 60%, most preferably 70% and especially approximately 72% (w/w) of the nodules have an average dimension of between 10 and 20 mm.

Preferably less than 10% of the nodules have a dimension greater than 20 mm.

In a preferred embodiment of the invention less than 15% of the nodules have a dimension between 5 and 10 mm.

In a particularly preferred embodiment of the invention, the bulk density of the nodules is at least 450 and preferably greater than 475 Kg/m³.

In a particularly preferred embodiment of the invention, high density fuel peat from which the nodules are formed has a density from 400 to 500 Kg/m³.

Preferably the peat from which the nodules are formed is well decomposed sod peat or lump peat.

The invention also provides a method for producing a biofiltration medium comprising crushing high density fuel peat to produce crushed sod turf and screening the crushed sod turf to produce the peat nodules.

Preferably the method includes the steps of:-
screening the crushed sod turf to provide a fines fraction, an on-size fraction, and an over-size coarse fraction;
eliminating the fines fraction;
chopping the coarse fraction; and
screening the chopped coarse fraction to provide further on-size fraction peat nodules having the desired density and size range.

In a preferred embodiment the crushed sod turf is screened in a double deck screen base having two screens. Preferably to produce the desired size range the screens are 22mm and 12 mm screens.

In one embodiment of the invention oversize fraction from the double deck screen base is recycled for chopping and subsequent re-screening.

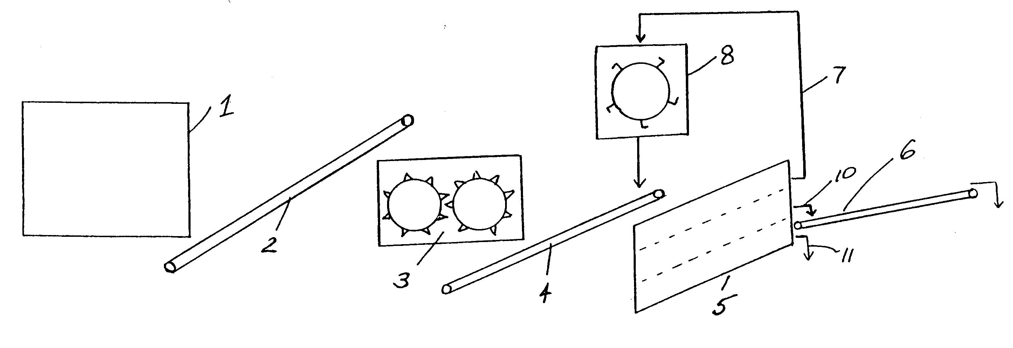

The invention will be more clearly understood from the following description thereof given by way of example only with reference to the accompanying drawing which is a schematic view of a method for producing a biofiltration medium according to the invention.

Specialised high density well decomposed sod (lump) fuel peat is tippled into a receiving hopper 1 and delivered by a conveyor 2 to a conical pin crushing drum plant 3 which produces crushed sod turf. The fines from the crushed sod turf are extracted and discarded. The coarse size fraction is delivered by a conveyor 4 to a double deck finger screen box 5 fitted with 22 mm and 12 mm wire screens. On-size fraction 10 from the screen box 5 is the desired peat nodule product which is delivered by a conveyor 6 for storage. Fines 11 are eliminated. Oversize crushed sod turf that does not pass through the screen box 5 is recycled along line 7 to a flail/chopper unit 8 from which it is delivered again to the conveyor 4 for delivery to the screen box 5.

### Nodule Properties

The peat nodules produced by this processing technique have the following distinctive properties for biofiltration purposes:
- Bulk Density (average): ≥ 475 Kg/m³ (at 50% moisture)
- Moisture Content: ≤ 37%
- Particle Size (w/w): 90% ≤ 20 mm
82% ≥ 10 mm
96% ≥ 5 mm

The well decomposed sod fuel peat is highly degraded peat having von Post numbers of from 6 to 10. It is specifically selected to produce nodules which are characteristically hard and consequently resistant to abrasion and load deformation and which will undergo minimum expansion when absorbing water.

The peat nodules according to the invention provide a suitable environment for microbial growth and create sufficient voids to achieve a low pressure loss, small specific filter resistance, low mass and low energy requirements for good drainage and oxygenation.

The structure of the nodules is relatively regular and even resulting in uniform penetration by waste gases at a low pressure drop in biofiltration systems.

The nodules provide a large surface area for physical, chemical and biological reactions to occur. They also provide good buffering against pH fluctuations in the material being treated in the biofilter.

Because of the relatively low density of the nodules, they exhibit low back pressure characteristics and can therefore be used to construct biofilters of up to 3 metres high.

### EXAMPLE 1

Using the peat nodules described above, a biofilter was assembled with the following results.
- Application:: Animal By-product Rendering
- Source of foul gas:: Factory ventilation air Non-condensable process gases
- Pretreatment of non-condensable gases:: Cyclones for removal of particulates Packed tower acid scrubber
- Air Flow Rate:: 23,039m³/hr
- Biofiltration Medium:: Nodules having the properties given above.
- Biofilter volume:: 250m³
- Depth of Biofilter bed:: 1m

| **Chemical Analysis** | | |
|---|---|---|
| CHEMICAL | INLET | OUTLET |
| Hydrogen Sulphide (ppm) | 1.5 | not detected |
| Mercaptans (ppm) | 0.5 | not detected |
| Ammonia (ppm) | 7 | not detected |
| Amines Present | + | not detected |
| Triethylamine (ppm) | 32 | not detected |

| **Olfactometric Analysis** | |
|---|---|
| Biofilter Inlet | 44,839 OU/m³ |
| Biofilter Outlet | 158 OU/m³ |
| Inlet odour concentration (after pretreatment) | 10,000 - 50,000 OU/m³ |
| Performance: | Mean odour removal efficiency across filter bed* |

| Date | % |
|---|---|
| At installation | 98.7 |
| 6 months after installation | 98.5 |
| 9 months after installation | 99.5 |

| | |
|---|---|
| * determined by Forced Choice Dynamic Olfactometry | |

### EXAMPLE 2

- Application:: Sewage Treatment
- Bed Size:: 55m³ at 3m depth
- Air Flow Rate:: 5,500³/hour

| **Chemical Analysis** | | |
|---|---|---|
| CHEMICAL | INLET | OUTLET |
| Hydrogen Sulphide (ppm) | 7.5 | not detected |
| Mercaptans (ppm) | 2.1 | not detected |
| Ammonia (ppm) | 2.0 | <0.1 |

The invention is not limited to the embodiments hereinbefore described which may be varied in both construction and detail within the scope defined by the claims.

## Claims

1. A biofiltration medium comprising discrete units consisting of peat characterised in that the biofiltration medium comprises peat nodules formed from high density fuel peat having a von Post number of from 6 to 10, the nodules having a bulk density at 50% moisture content of at least 400 kg/m³ and at least 50% (w/w) of the nodules having an average dimension of between 10 mm and 20 mm.

2. A biofiltration medium as claimed in claim 1 wherein at least 60% (w/w) of the nodules have an average dimension of between 10 mm and 20 mm.

3. A biofiltration medium as claimed in claim 1 or 2 wherein at least 70% (w/w) of the nodules have an average dimension of between 10 mm and 20 mm.

4. A biofiltration medium as claimed in any preceding claim wherein approximately 72% (w/w) of the nodules have an average dimension of between 10 mm and 20 mm.

5. A biofiltration medium as claimed in any preceding claim wherein less than 10% (w/w) of the nodules have a dimension greater than 20 mm.

6. A biofiltration medium as claimed in any preceding claim wherein less than 15% (w/w) of the nodules have an average dimension of between 5 mm and 10 mm.

7. A biofiltration medium as claimed in any preceding claim wherein the bulk density of the nodules at 50% moisture content is at least 450 Kg/m³.

8. A biofiltration medium as claimed in any preceding claim wherein the bulk density of the nodules at 50% moisture content is at least 475 Kg/m³.

9. A biofiltration medium as claimed in any preceding claim wherein the peat from which the nodules are formed has a density of from 400 to 500 Kg/m³.

10. A biofiltration medium as claimed in any preceding claim wherein the peat from which the modules are formed is well decomposed sod peat or lump peat.

11. A method for producing a biofiltration medium as claimed in any preceding claim comprising crushing high density fuel peat to produce crushed sod turf and screening the crushed sod turf to produce the peat nodules.

12. A method as claimed in claim 11 including the steps of:-
screening the crushed sod turf to provide a fines fraction, an on-size fraction, and an over-size coarse fraction;
eliminating the fines fraction;
chopping the coarse fraction; and
screening the chopped coarse fraction to provide further on-size fraction peat nodules having the desired density and size range.

13. A method as claimed in claim 12 wherein the crushed sod turf is screened in a double deck screen base having two screens.

14. A method as claimed in claim 13 wherein the screens are 22mm and 12 mm screens.

15. A method as claimed in claim 13 or 14 wherein oversize fraction from the double deck screen is recycled for chopping and subsequent re-screening.

## Patentansprüche

1. Biofiltrationsmedium, das getrennte, aus Torf bestehende Einheiten aufweist, **dadurch gekennzeichnet,** daß das Biofiltrationsmedium aus Brennstoff-Torf mit hoher Dichte gebildete Torf-Klumpen mit einer Stempelzahl von 6 bis 10 aufweist, wobei die Klumpen eine Schüttdichte bei 50 % Feuchtigkeitsgehalt von mindestens 400 kg/m³ aufweisen und mindestens 50 % (Gew./Gew.) der Klumpen eine durchschnittliche Abmessung von zwischen 10 mm und 20 mm aufweisen.

2. Biofiltrationsmedium nach Anspruch 1,
wobei mindestens 60 % (Gew./Gew.) der Klumpen eine durchschnittliche Abmessung von zwischen 10 und 20 mm aufweisen.

3. Biofiltrationsmedium nach Anspruch 1 oder 2,
wobei mindestens 70 % (Gew./Gew.) der Klumpen eine durchschnittliche Abmessung von zwischen 10 und 20 mm aufweisen.

4. Biofiltrationsmedium nach einem der vorhergehenden Ansprüche,
wobei etwa 72 % (Gew./Gew.) der Klumpen eine durchschnittliche Abmessung von zwischen 10 mm und 20 mm aufweisen.

5. Biofiltrationsmedium nach einem der vorhergehenden Ansprüche,
wobei weniger als 10 % (Gew./Gew.) der Klumpen eine Abmessung von größer als 20 mm aufweisen.

6. Biofiltrationsmedium nach einem der vorhergehenden Ansprüche,
wobei weniger als 15 % (Gew./Gew.) der Klumpen eine durchschnittliche Abmessung von zwischen 5 und 10 mm aufweisen.

7. Biofiltrationsmedium nach einem der vorhergehenden Ansprüche,
wobei die Schüttdichte der Klumpen bei 50 % Feuchtigkeitsgehalt mindestens 450 kg/m³ beträgt.

8. Biofiltrationsmedium nach einem der vorhergehenden Ansprüche,
wobei die Schüttdichte der Klumpen bei 50 % Feuchtigkeitsgehalt mindestens 475 kg/m³ beträgt.

9. Biofiltrationsmedium nach einem der vorhergehenden Ansprüche,
wobei der Torf, aus dem die Klumpen gebildet sind, eine Dichte von 400 bis 500 kg/m³ aufweist.

10. Biofiltrationsmedium nach einem der vorhergehenden Ansprüche,
wobei der Torf, aus dem die Klumpen gebildet sind, gut zersetzter Grasnaben-Torf oder großklumpiger Torf ist.

11. Verfahren zur Herstellung eines Biofiltrationsmediums nach einem der vorhergehenden Ansprüche, welches umfaßt: Zerkleinem eines Brennstoff-Torfes hoher Dichte, um zerkleinerten Grasnaben-Torf herzustellen, und Sieben des zerkleinerten Grasnaben-Torfs, um die Torf-Klumpen zu bilden.

12. Verfahren nach Anspruch 11, welches die folgenden Schritte umfaßt:
Sieben des zerkleinerten Grasnaben-Torfs, um eine Feinstgutfraktion, eine Fraktion mit richtiger Größe und eine grobe Fraktion mit Übergröße bereitzustellen,
Entfernen der Feinstgutfraktion,
Zerkleinern der groben Fraktion, und
Sieben der zerkleinerten groben Fraktion, um eine weitere Fraktion von Torf-Klumpen mit richtiger Größe und gewünschter Dichte und Größenbereich bereitzustellen.

13. Verfahren nach Anspruch 12,
wobei der zerkleinerte Grasnaben-Torf in einem zweistöckigen Sieb-Träger mit zwei Sieben gesiebt wird.

14. Verfahren nach Anspruch 13,
wobei die Siebe 22-mm-und 12-mm-Siebe sind.

15. Verfahren nach Anspruch 13 oder 14,
wobei die Fraktion mit Übergröße aus dem zweistöckigen Sieb zum Zerkleinern und nachfolgenden erneuten Sieben zurückgeführt wird.

## Revendications

1. Milieu de biofiltration comprenant des unités individuelles constituées de tourbe caractérisé par le fait que le milieu de biofiltration est constitué de nodules de tourbes provenant de tourbe combustible à haute densité ayant un nombre de von Post de 6 à 10, les nodules ayant une densité volumique, à 50% d'hydratation, d'au moins 400 kg/m³ et au moins 50% des nodules ayant une dimension moyenne comprise entre 10 mm et 20 mm.

2. Milieu de biofiltration selon la revendication 1 dans lequel au moins 60% (poids/poids) des nodules ont une dimension moyenne comprise entre 10 et 20 mm.

3. Milieu de biofiltration selon la revendication 1 ou 2 dans lequel au moins 70% (poids/poids) des nodules ont une dimension moyenne comprise entre 10 et 20 mm.

4. Milieu de biofiltration selon l'une des revendications précédentes dans lequel approximativement 72% (poids/poids) des nodules ont une dimension moyenne comprise entre 10 et 20 mm.

5. Milieu de biofiltration selon l'une des revendications précédentes dans lequel moins de 10% (poids/poids) des nodules ont une dimension supérieure à 20 mm.

6. Milieu de biofiltration selon l'une des revendications précédentes dans lequel moins de 15% (poids/poids) des nodules ont une dimension moyenne comprise entre 5 mm et 10 mm.

7. Milieu de biofiltration selon l'une des revendications précédentes dans lequel la densité volumique des nodules à 50% d'hydratation est d'au moins 450 kg/m³.

8. Milieu de biofiltration selon l'une des revendications précédentes dans lequel la densité volumique des nodules, à 50% d'hydratation, est d'au moins 475 kg/m³.

9. Milieu de biofiltration selon l'une des revendications précédentes dans lequel la tourbe à partir de laquelle les nodules sont formés a une densité volumique de 400 à 500 kg/m³.

10. Milieu de biofiltration selon l'une des revendications précédentes dans lequel la tourbe à partir de laquelle les nodules sont formés est de la tourbe bien décomposée sous forme de mottes ou de gros morceaux.

11. Procédé de production d'un milieu de biofiltration selon l'une des revendication précédentes comprenant le broyage de tourbe combustible de haute densité pour produire des mottes de tourbe brisée et le tri des mottes de tourbe brisée pour produire des nodules de tourbe.

12. Procédé selon la revendication 11 comprenant les étapes consistant à :
- trier les mottes de tourbe brisée pour fournir une fraction de fines, une fraction homogène en taille, et une fraction grossière de taille plus grande.
- éliminer la fraction de fines et,
- concasser la fraction grossière, et
- trier la fraction grossière concassée pour obtenir d'avantage de nodules de tourbe sous forme de fraction homogène en taille ayant la densité et la taille désirées.

13. Procédé selon la revendication 12 dans lequel les mottes de tourbe brisée sont triées sur une plate - forme de tri à double niveau ayant deux tamis.

14. Procédé selon la revendication 13 dans lequel les tamis sont des tamis de 22 mm et 12 mm.

15. Procédé selon les revendications 13 et 14 dans lequel la fraction de taille supérieure provenant de la plate-forme de tri à double niveau est recyclée pour être concassée et re-triée par la suite.
